# EUROPEAN PATENT APPLICATION

(11) **EP 4 725 685 A1**
(43) Date of publication of application: **15.04.2026**
(21) Application number: 25189549.6
(22) Date of filing: 15.07.2025
(51) Int. Cl.: B29C 73/16, G06Q 10/20, G06Q 10/30

(54) **RECYCLING METHOD FOR PUNCTURE REPAIR KIT AND PUNCTURE REPAIR KIT MANAGEMENT DEVICE**

(30) Priority: 11.10.2024 JP 2024179355
(71) Applicant: SUMITOMO RUBBER INDUSTRIES, LTD., Kobe-shi, Hyogo 651-0072 (JP)
(72) Inventor: MAKI, TAKASHI, Hyogo, 651-0072 (JP); HIRANO, SHINICHIRO, Hyogo, 651-0072 (JP)
(74) Representative: Forresters IP LLP

(57) **Abstract**

A recycling method for a puncture repair kit disclosed herein includes an acquisition step S10 and a classification step S20. In the acquisition step S10, information by which at least a manufacturing lot of a tire puncture repair kit including a puncture repair liquid can be specified is acquired. In the classification step S20, a recycling method for the puncture repair liquid is classified on the basis of the information by which the manufacturing lot can be specified.

## Description

### BACKGROUND OF THE INVENTION

### Field of the Invention

The present invention relates to a recycling method for a puncture repair kit and a puncture repair kit management device.

### Background Art

Japanese Laid-Open Patent Publication No. 2018-163608 discloses an expiration date notification method for a puncture repair liquid, the method using an information terminal device. The information terminal device disclosed in Japanese Laid-Open Patent Publication No. 2018-163608 includes a storage means, a notification condition setting means, a notification means, and a control means. The storage means stores an expiration date of a puncture repair liquid accommodated in a container. The notification condition setting means sets a notification period and a notification method for providing a notification of a replacement timing of the puncture repair liquid on the basis of the expiration date. The notification means provides the notification of the replacement timing of the puncture repair liquid. The control means controls the notification means on the basis of a setting of the notification condition setting means. The information terminal device provides the notification of the replacement timing of the puncture repair liquid through a preset notification method during a preset notification period before and after the expiration date of the puncture repair liquid. Thus, a user can appropriately replace the puncture repair liquid and constantly have the puncture repair liquid in a good state, making it possible to smoothly carry out repair work if a tire is punctured.

The present inventors desire to effectively utilize an unused tire puncture repair kit.

### SUMMARY OF THE INVENTION

A recycling method for a puncture repair kit disclosed herein includes an acquisition step and a classification step. In the acquisition step, information by which at least a manufacturing lot of a tire puncture repair kit including a puncture repair liquid can be specified is acquired. In the classification step, a recycling method for the puncture repair liquid is classified on the basis of the information by which the manufacturing lot can be specified.

According to the recycling method, the puncture repair liquid is effectively utilized.

### BRIEF DESCRIPTION OF THE DRAWINGS

FIG. 1 is a schematic diagram of a puncture repair kit 1;
FIG. 2 is a block diagram of a puncture repair kit management device 30;
FIG. 3 is a flowchart of a recycling method for a puncture repair kit; and
FIG. 4 is a graph showing an example of the relationship between an elapsed period and the weight-average molecular weight of natural rubber.

### DETAILED DESCRIPTION

Hereinafter, embodiments of the present invention will be described with reference to the drawings. It is noted that the present invention is not limited to the following embodiments. Each drawing is schematically drawn and does not necessarily reflect the actual one. In addition, each drawing shows only one example, and does not limit the present invention unless otherwise specified. Moreover, members and parts that perform the same effect are designated as appropriate by the same reference characters, and the redundant description thereof is omitted.

### <Puncture Repair Kit 1>

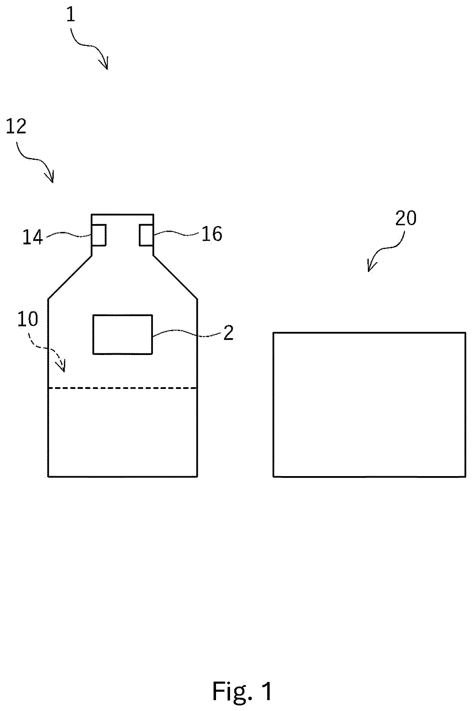

FIG. 1 is a schematic diagram of a puncture repair kit 1. The puncture repair kit 1 is a kit for temporarily repairing a tire if the tire is punctured. The puncture repair kit 1 can be provided in a vehicle. The puncture repair kit 1 has attached thereto an identifier 2 associated with information of the puncture repair kit 1. For example, a two-dimensional code such as a matrix code or a stacked code can be used as the identifier 2, but is not particularly limited thereto. The identifier 2 is attached to a bottle 12 described later, but is not particularly limited thereto. The identifier 2 is not particularly limited as long as the identifier 2 is associated with the information of the puncture repair kit 1. The identifier 2 may be, for example, recognizable by visual sense. The identifier 2 may be, for example, a sequence composed of any of numbers, alphabets, and symbols.

As shown in FIG. 1, the puncture repair kit 1 includes a puncture repair liquid 10 accommodated in the bottle 12, and a compressor 20. The puncture repair liquid 10 can contain natural rubber and a propylene glycol aqueous solution. The components of the puncture repair liquid 10 are not limited to the natural rubber and the propylene glycol aqueous solution.

The bottle 12 is provided with a supply port 14 and a discharge port 16. The discharge port 16 is connected to an air valve of a punctured tire via a tube (not shown). The compressor 20 is connected to the supply port 14. Air compressed by the compressor 20 is supplied into the bottle 12 through the supply port 14. The compressed air and the puncture repair liquid 10 are mixed and discharged through the discharge port 16. Accordingly, the inside of the punctured tire is filled with the compressed air, and the puncture repair liquid 10 is injected thereinto. By causing the vehicle to travel for a predetermined time in this state, the puncture repair liquid 10 spreads inside the tire and dissolves rubber components of the inner wall surface of the tire. The puncture repair liquid 10 containing the dissolved rubber components seals a punctured area from inside. Accordingly, the tire puncture is temporarily repaired.

The natural rubber contained in the puncture repair kit 1 deteriorates with time. Therefore, the puncture repair kit 1 needs to be regularly replaced with a new one even if the puncture repair kit 1 has not been used.

The recycling method for a puncture repair kit can be realized by a puncture repair kit management device 30. Hereinafter, the recycling method for a puncture repair kit will be described along with the configuration of the puncture repair kit management device 30.

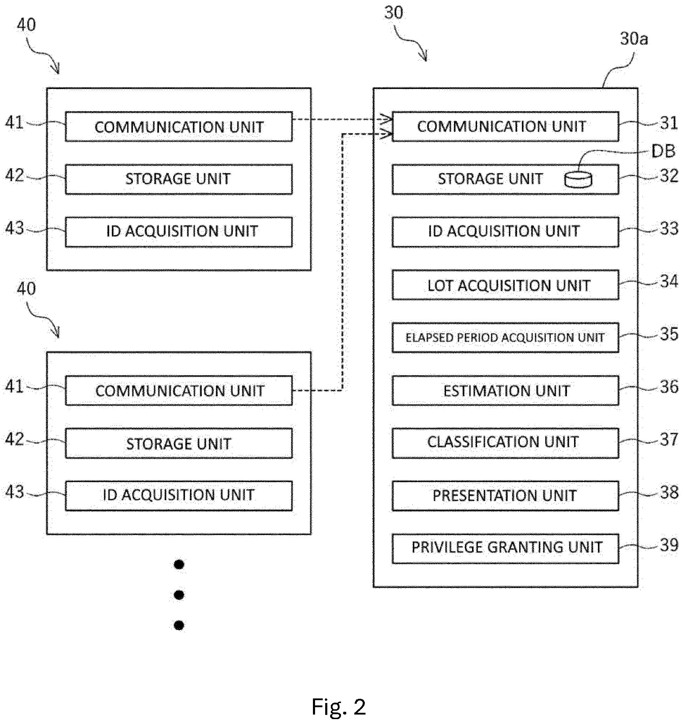

FIG. 2 is a block diagram of the puncture repair kit management device 30. As shown in FIG. 2, the puncture repair kit management device 30 includes a control device 30a. The configuration of the control device 30a is not particularly limited. The control device 30a may be, for example, a microcomputer. The control device 30a includes, for example, an I/F, a CPU, a ROM, and a RAM. The puncture repair kit management device 30 may be realized by means of a single computer or by cooperation of multiple computers. The puncture repair kit management device 30 may be realized, for example, by means of a server of a client server system or cloud computing. The managing and operating entity for the puncture repair kit management device 30 is not particularly limited, but, for example, a tire sales company can be assumed to manage the puncture repair kit management device 30.

The control device 30a of the puncture repair kit management device 30 includes a communication unit 31, a storage unit 32, an ID acquisition unit 33, a lot acquisition unit 34, an elapsed period acquisition unit 35, an estimation unit 36, a classification unit 37, a presentation unit 38, and a privilege granting unit 39. In this embodiment, the ID acquisition unit 33 and the lot acquisition unit 34 can function as lot information acquisition units 33, 34. Each of the units 31 to 39 of the control device 30a may be realized by means of a single processor or a plurality of processors, or may be incorporated into a circuit.

The communication unit 31 is configured so as to be capable of communicating with a store terminal 40. The store terminal 40 is provided at each store such as a tire sales company or a vehicle manufacturer, which collects the puncture repair kit 1. The store terminal 40 is a terminal that reads the identifier 2 of the puncture repair kit 1. The store terminal 40 may be a portable terminal or a mobile terminal, or may be a terminal fixed at each facility. The store terminal 40 includes a communication unit 41, a reading unit 42, and an ID acquisition unit 43. The reading unit 42 can be a camera that reads the identifier 2 of the puncture repair kit 1. The reading unit 42 images the identifier 2 of the puncture repair kit 1. The ID acquisition unit 43 acquires an ID of the puncture repair kit 1 from the identifier 2 imaged by the reading unit 42. The ID acquired by the ID acquisition unit 43 is transmitted to the puncture repair kit management device 30 via the communication unit 41. Here, the ID is a number for specifying the puncture repair kit 1. The ID is individually attached to each puncture repair kit 1. The ID is assigned, for example, at the time of manufacturing the puncture repair kit 1. The ID acquisition unit 43 is not limited to the aforementioned form. The ID acquisition unit 43 can be selected as appropriate in accordance with the form of the identifier 2. For example, when the identifier 2 is recognizable by visual sense or the like, the ID acquisition unit 43 may serve as an input reception unit that acquires an ID through an input with a keyboard, a touch panel, or the like. Information of the identifier 2 may be inputted by a user of the store terminal 40 so that the ID is acquired by the ID acquisition unit 43.

When the ID is transmitted from the store terminal 40 to the puncture repair kit management device 30, a process (acquisition step S10) for acquiring information by which a manufacturing lot can be specified is executed in the puncture repair kit management device 30.

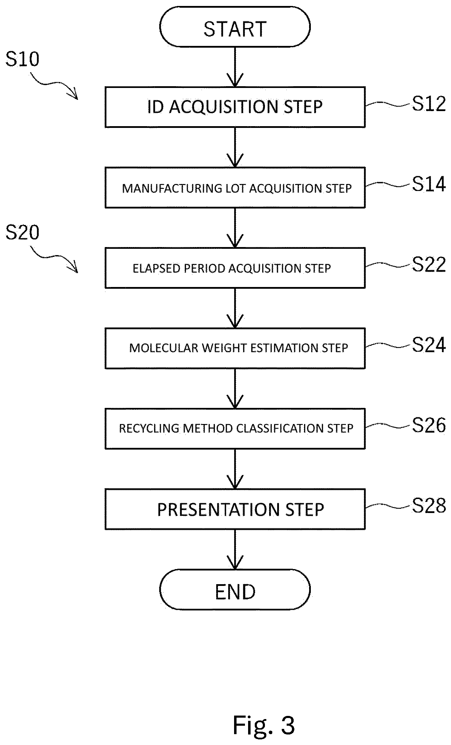

FIG. 3 is a flowchart of the recycling method for a puncture repair kit. As shown in FIG. 3, the recycling method for a puncture repair kit disclosed herein includes an acquisition step S10 and a classification step S20.

The acquisition step S10 is a step of acquiring information by which at least a manufacturing lot of the puncture repair kit 1 can be specified. Here, the "information by which a manufacturing lot can be specified" is not particularly limited as long as the information is associated with the manufacturing lot. The "information by which a manufacturing lot can be specified" may be, for example, an ID associated with the manufacturing lot, the identifier 2 attached to the puncture repair kit 1, or the manufacturing lot itself. The acquisition step S10 includes an ID acquisition step S12 of acquiring the ID and a manufacturing lot acquisition step S14 of acquiring the manufacturing lot.

In this embodiment, the information by which the manufacturing lot of the puncture repair kit 1 can be specified is an ID. As mentioned above, the ID is assigned at the time of manufacturing of the puncture repair kit 1. The ID is associated with the manufacturing lot at the time of manufacturing of the puncture repair kit 1. The ID and the manufacturing lot of each puncture repair kit 1 are stored, for example, in the storage unit 32 of the puncture repair kit management device 30. In the ID acquisition step S12, the ID acquisition unit 33 of the control device 30a receives the ID of the puncture repair kit 1 transmitted from the store terminal 40, via the communication unit 31. In the manufacturing lot acquisition step S14, the lot acquisition unit 34 of the control device 30a refers to the storage unit 32 and acquires the manufacturing lot from the ID of the puncture repair kit 1. In the puncture repair kit management device 30, when the manufacturing lot is acquired, a process (classification step S20) for classifying the recycling method for the puncture repair liquid 10 is subsequently executed.

The classification step S20 is a step of classifying the recycling method for the puncture repair liquid 10 on the basis of the information by which the manufacturing lot can be specified. In this embodiment, the information by which the manufacturing lot can be specified is the manufacturing lot itself.

In the classification step S20, the state of the natural rubber contained in the puncture repair liquid 10 may be estimated on the basis of the information by which the manufacturing lot can be specified. In the classification step S20, the recycling method for the puncture repair liquid 10 may be classified in accordance with the state of the natural rubber. Through classification by using, as a reference, the state of the natural rubber, which tends to deteriorate in the puncture repair liquid 10, the puncture repair liquid 10 is easily recycled in more appropriate uses.

In this embodiment, the classification step S20 includes an elapsed period acquisition step S22, a molecular weight estimation step S24, a recycling method classification step S26, and a presentation step S28.

The elapsed period acquisition step S22 is a step of acquiring an elapsed period from the time of manufacturing of the puncture repair liquid 10 on the basis of the manufacturing lot of the puncture repair kit 1. In the storage unit 32, the manufacturing date of each puncture repair kit 1 is stored along with the manufacturing lot. The elapsed period acquisition unit 35 acquires the elapsed period from the manufacturing date of the puncture repair liquid 10 on the basis of the current date and the manufacturing date stored along with the manufacturing lot.

The molecular weight estimation step S24 is a step of estimating the weight-average molecular weight of the natural rubber contained in the puncture repair liquid 10 on the basis of the manufacturing lot of the puncture repair kit 1. According to the findings of the present inventors, the natural rubber contained in the puncture repair liquid 10 deteriorates with time. Bonds in the macromolecules in the natural rubber are broken over time, resulting in a decrease in molecular weight (weight-average molecular weight). According to the findings of the present inventors, if the elapsed periods from the time of manufacturing of the puncture repair liquids are the same, the decrease levels of the weight-average molecular weights of the natural rubbers are approximately the same. The relationship between the elapsed period and the weight-average molecular weight of the natural rubber can be acquired in advance as an estimated value through a test, simulation, etc.

In the molecular weight estimation step S24, the estimation unit 36 acquires the elapsed period on the basis of the manufacturing lot of the puncture repair kit 1. Furthermore, the estimation unit 36 estimates the weight-average molecular weight on the basis of a database DB stored in the storage unit 32 and the elapsed period. Accordingly, the accuracy of estimation of the weight-average molecular weight of the natural rubber can be improved. When the weight-average molecular weight of the natural rubber contained in the puncture repair liquid 10 is estimated, the recycling method is subsequently classified.

In the recycling method classification step S26, the classification unit 37 classifies the recycling method for the puncture repair liquid 10 in accordance with the weight-average molecular weight. In other words, the natural rubber contained in the puncture repair liquid 10 is recycled in different uses in accordance with the weight-average molecular weight. The recycling method is classified in a plurality of uses in accordance with, for example, the weight-average molecular weight.

Here, the classification unit 37 classifies the recycling method for the puncture repair liquid 10 such that, as the weight-average molecular weight of the natural rubber contained in the puncture repair liquid 10 increases, the puncture repair liquid 10 is recycled into a material requiring greater strength. The natural rubber having a high weight-average molecular weight can be used as a material for, for example, artificial turf backing materials.

In addition, the classification unit 37 classifies the recycling method for the puncture repair liquid 10 such that, as the weight-average molecular weight of the natural rubber contained in the puncture repair liquid 10 decreases, the puncture repair liquid 10 is recycled into a material requiring greater viscosity. The natural rubber having a low weight-average molecular weight can be used as a material for, for example, rubber adhesives. In this manner, even the puncture repair liquid 10 that has deteriorated to some extent can be effectively recycled.

In the presentation step S28, the presentation unit 38 presents the recycling method classified by the classification unit 37 as a recycling method for the puncture repair liquid 10. The puncture repair liquid 10 can be collected by a recycle company, etc. The natural rubber is recycled in accordance with the recycling method classified by the classification unit 37. From the collected puncture repair liquid 10, the natural rubber and the propylene glycol aqueous solution are separated. The propylene glycol aqueous solution may be recycled into, for example, a newly manufactured puncture repair liquid or a newly manufactured puncture repair kit. A bottle unit of the puncture repair kit 1 can be crushed, cleaned, and recycled into a material for bottles again. The compressor 20 can be disassembled, melted by part, and recycled into materials for compressors again.

In the aforementioned embodiment, the recycling method for a puncture repair kit includes the acquisition step S10 and the classification step S20. The acquisition step S10 is a step of acquiring the information by which at least the manufacturing lot of the puncture repair kit 1 can be specified. The classification step S20 is a step of classifying the recycling method for the puncture repair liquid 10 on the basis of the information by which the manufacturing lot can be specified. The state of the puncture repair liquid 10 can vary depending on the manufacturing lot. According to the recycling method, the recycle use can be selected as appropriate in accordance with the manufacturing lot. As a result, the puncture repair liquid 10 can be effectively utilized.

In the aforementioned embodiment, in the classification step S20, the weight-average molecular weight of the natural rubber contained in the puncture repair liquid 10 is estimated on the basis of the information by which the manufacturing lot can be specified (molecular weight estimation step S24). In addition, in the classification step S20, the recycling method for the puncture repair liquid 10 is classified in accordance with the weight-average molecular weight (recycling method classification step S26). The physical properties of natural rubber tend to depend on the weight-average molecular weight. By classifying the recycling method in accordance with the weight-average molecular weight of the natural rubber, the puncture repair liquid 10 is easily recycled in more appropriate uses.

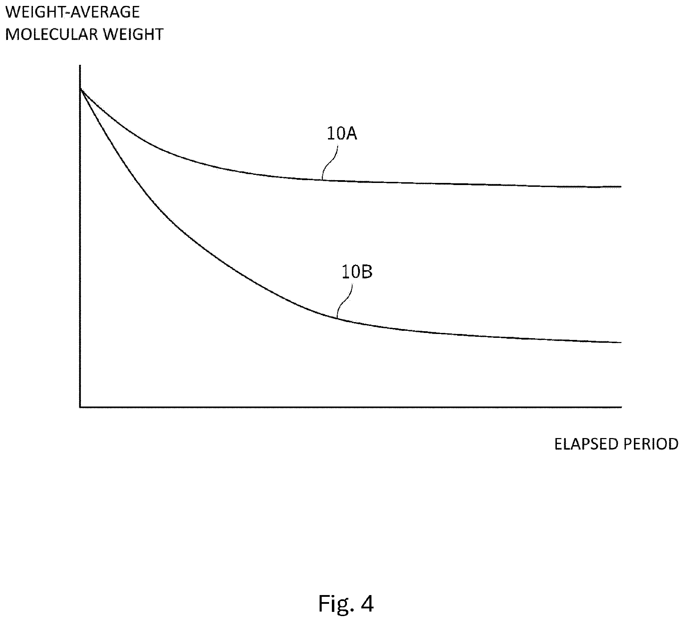

The natural rubber contained in the puncture repair liquid 10 can vary depending on the product. FIG. 4 is a graph showing an example of the relationship between the elapsed period and the weight-average molecular weight of each natural rubber. FIG. 4 shows temporal change in the weight-average molecular weight of the natural rubber contained in each of two types of puncture repair liquids 10A and 10B. The weight-average molecular weight of the natural rubber contained in each of the puncture repair liquids 10A and 10B decreases exponentially over time. Here, the puncture repair liquid 10A and the puncture repair liquid 10B are different products. The decrease in the weight-average molecular weight of the natural rubber contained in the puncture repair liquid 10A is more gradual as compared to that in the puncture repair liquid 10B. The storage unit 32 of the control device 30a includes a database DB in which the relationship between the elapsed period from the time of manufacturing of the puncture repair liquid and the estimated value of the weight-average molecular weight of the natural rubber is recorded. In the form shown in FIG. 4, the relationship between the elapsed period and the weight-average molecular weight of the natural rubber contained in each of the puncture repair liquids 10A and 10B is shown. The database DB may store the relationship between the elapsed period and the weight-average molecular weight of the natural rubber with respect to one type of the puncture repair liquid. The database DB may store the relationships between the elapsed periods and the weight-average molecular weights of the natural rubbers with respect to much more types of the puncture repair liquids. By classifying the recycling method on the basis of the weight-average molecular weight, natural rubbers with similar deterioration states can be used in similar uses even when the natural rubbers are contained in different products.

In the classification step S20, the puncture repair liquid 10 may be ranked in accordance with the weight-average molecular weight. For example, the recycling value of natural rubber can become higher as the weight-average molecular weight increases. The puncture repair liquid 10 may be ranked so as to be higher in rank as the weight-average molecular weight increases. The presentation step S28 may include a privilege granting step of granting a privilege to the owner of the puncture repair kit 1 according to the rank. In the presentation step S28, the privilege granting unit 39 grants a privilege to the owner of the puncture repair kit 1 according to the rank. The privilege to be granted to the owner may include, for example, acquisition of points, coupons, complimentary tickets, or goods. The privilege to be granted to the owner can be electronically granted via the owner's terminal or the like. Accordingly, the owner of the puncture repair kit 1 is motivated to bring the puncture repair kit 1 to a store before the deterioration of the puncture repair liquid 10 progresses too far. As a result, the puncture repair liquid 10 containing the natural rubber having a relatively high weight-average molecular weight, which has a relatively high recycling value, is more easily collected.

It is noted that in the classification step S20, the recycling method does not necessarily need to be classified on the basis of the weight-average molecular weight of the natural rubber. In the classification step S20, the recycling method for the puncture repair liquid 10 may be classified on the basis of the elapsed period from the time of manufacturing. As mentioned above, the deterioration of the puncture repair liquid 10 progresses in correspondence with the elapsed period from the time of manufacturing. The recycle use of the puncture repair liquid 10 may be predetermined in accordance with the elapsed period from the time of manufacturing. Through this method, in a case where one type of the puncture repair liquid 10 is to be recycled, or the like, the recycling method is more simply classified.

In this embodiment, the ID of the puncture repair kit 1 is acquired at the store terminal 40 and transmitted to the puncture repair kit management device 30, but is not limited to such a form. For example, the identifier 2 read at the store terminal 40 may be transmitted to another terminal. The ID may be acquired at the other terminal and transmitted to the puncture repair kit management device 30. The identifier 2 or the data thereof read at the store terminal 40 may be sent to the puncture repair kit management device 30. In this case, the ID may be acquired at the puncture repair kit management device 30. The manufacturing lot may be directly acquired at the puncture repair kit management device 30 without acquiring the ID.

The technologies disclosed herein have been described in various ways. However, the technologies disclosed herein are not limited to the above-described embodiments unless otherwise specified. In addition, the configurations of the various embodiments described can be appropriately combined as long as the configurations do not interfere with each other. The present specification includes the following disclosures, which are not limited to the above-described embodiments.

Present Invention (1) relates to a recycling method for a puncture repair kit. The recycling method for a puncture repair kit according to Present Invention (1) includes:
an acquisition step of acquiring information by which at least a manufacturing lot of a tire puncture repair kit including a puncture repair liquid can be specified; and
a classification step of classifying a recycling method for the puncture repair liquid on the basis of the information by which the manufacturing lot can be specified.

Present Invention (2) is the recycling method for a puncture repair kit according to Present Invention (1), wherein, in the classification step, an elapsed period from a time of manufacturing of the tire puncture repair kit is acquired on the basis of the information by which the manufacturing lot can be specified and the recycling method for the puncture repair liquid is classified on the basis of the elapsed period from the time of manufacturing.

Present Invention (3) is the recycling method for a puncture repair kit according to Present Invention (2), wherein, in the classification step, a state of natural rubber contained in the puncture repair liquid is estimated on the basis of the information by which the manufacturing lot can be specified, and the recycling method for the puncture repair liquid is classified in accordance with the state of the natural rubber.

Present Invention (4) is the recycling method for a puncture repair kit according to Present Invention (3), wherein, in the classification step, a weight-average molecular weight of the natural rubber contained in the puncture repair liquid is estimated on the basis of the information by which the manufacturing lot can be specified, and the recycling method for the puncture repair liquid is classified in accordance with the weight-average molecular weight.

Present Invention (5) is the recycling method for a puncture repair kit according to Present Invention (4), wherein, in the classification step, the recycling method for the puncture repair liquid is classified such that, as the weight-average molecular weight increases, the puncture repair liquid is recycled into a material requiring greater strength.

Present Invention (6) is the recycling method for a puncture repair kit according to Present Invention (4) or (5), wherein, in the classification step, the recycling method for the puncture repair liquid is classified such that, as the weight-average molecular weight decreases, the puncture repair liquid is recycled into a material requiring greater viscosity.

Present Invention (7) is the recycling method for a puncture repair kit according to any one of Present Inventions (4) to (6), wherein,
in the classification step, the puncture repair liquid is ranked in accordance with the weight-average molecular weight, and
the recycling method for a puncture repair kit further includes a privilege granting step of granting a privilege to an owner of the puncture repair kit in accordance with the rank.

Present Invention (8) relates to a puncture repair kit management device. The puncture repair kit management device according to Present Invention (8) includes:
a lot information acquisition unit configured to acquire information by which at least a manufacturing lot of a tire puncture repair kit including a puncture repair liquid can be specified; and
a classification unit configured to classify a recycling method for the puncture repair liquid on the basis of the information by which the manufacturing lot can be specified.

Present Invention (9) is the puncture repair kit management device according to Present Invention (8), further including an elapsed period acquisition unit configured to acquire an elapsed period from a time of manufacturing of the tire puncture repair kit on the basis of the information by which the manufacturing lot can be specified, wherein
the classification unit classifies the recycling method for the puncture repair liquid on the basis of the elapsed period from the time of manufacturing.

Present Invention (10) is the puncture repair kit management device according to Present Invention (9), further including an estimation unit configured to estimate a state of natural rubber contained in the puncture repair liquid on the basis of the information by which the manufacturing lot can be specified, wherein
the classification unit classifies the recycling method for the puncture repair liquid in accordance with the state of the natural rubber.

Present Invention (11) is the puncture repair kit management device according to Present Invention (10), wherein
the estimation unit estimates a weight-average molecular weight of the natural rubber contained in the puncture repair liquid on the basis of the information by which the manufacturing lot can be specified, and
the classification unit classifies the recycling method for the puncture repair liquid in accordance with the weight-average molecular weight.

Present Invention (12) is the puncture repair kit management device according to Present Invention (11), wherein the classification unit classifies the recycling method for the puncture repair liquid such that, as the weight-average molecular weight increases, the puncture repair liquid is recycled into a material requiring greater strength.

Present Invention (13) is the puncture repair kit management device according to Present Invention (11) or (12), wherein the classification unit classifies the recycling method for the puncture repair liquid such that, as the weight-average molecular weight decreases, the puncture repair liquid is recycled into a material requiring greater viscosity.

Present Invention (14) is the puncture repair kit management device according to any one of Present Inventions (11) to (13), further including a privilege granting unit configured to rank the puncture repair liquid in accordance with the weight-average molecular weight and grant a privilege to an owner of the puncture repair kit in accordance with the rank.

Present Invention (15) is the puncture repair kit management device according to any one of Present Inventions (11) to (14), further including a database in which a relationship between an elapsed period from a time of manufacturing of the puncture repair liquid and an estimated value of the weight-average molecular weight of the natural rubber is recorded, wherein
the estimation unit acquires the elapsed period on the basis of the information by which the manufacturing lot can be specified and estimates the weight-average molecular weight on the basis of the database and the elapsed period.

## Claims

1. A recycling method for a puncture repair kit, the method comprising:
an acquisition step of acquiring information by which at least a manufacturing lot of a tire puncture repair kit (1) including a puncture repair liquid (10, 10A, 10B) can be specified; and
a classification step of classifying a recycling method for the puncture repair liquid (10, 10A, 10B) on the basis of the information by which the manufacturing lot can be specified.

2. The recycling method for a puncture repair kit according to claim 1, wherein, in the classification step, an elapsed period from a time of manufacturing of the tire puncture repair kit is acquired on the basis of the information by which the manufacturing lot can be specified, and the recycling method for the puncture repair liquid (10, 10A, 10B) is classified on the basis of the elapsed period from the time of manufacturing.

3. The recycling method for a puncture repair kit according to claim 2, wherein, in the classification step, a state of natural rubber contained in the puncture repair liquid (10, 10A, 10B) is estimated on the basis of the information by which the manufacturing lot can be specified, and the recycling method for the puncture repair liquid (10, 10A, 10B) is classified in accordance with the state of the natural rubber.

4. The recycling method for a puncture repair kit according to claim 3, wherein, in the classification step, a weight-average molecular weight of the natural rubber contained in the puncture repair liquid (10, 10A, 10B) is estimated on the basis of the information by which the manufacturing lot can be specified, and the recycling method for the puncture repair liquid (10, 10A, 10B) is classified in accordance with the weight-average molecular weight.

5. The recycling method for a puncture repair kit according to claim 4, wherein, in the classification step, the recycling method for the puncture repair liquid (10, 10A, 10B) is classified such that, as the weight-average molecular weight increases, the puncture repair liquid (10, 10A, 10B) is recycled into a material requiring greater strength.

6. The recycling method for a puncture repair kit according to claim 4 or 5, wherein, in the classification step, the recycling method for the puncture repair liquid (10, 10A, 10B) is classified such that, as the weight-average molecular weight decreases, the puncture repair liquid (10, 10A, 10B) is recycled into a material requiring greater viscosity.

7. The recycling method for a puncture repair kit according to any one of claims 4 to 6, wherein,
in the classification step, the puncture repair liquid (10, 10A, 10B) is ranked in accordance with the weight-average molecular weight, and
the recycling method for a puncture repair kit further comprises a privilege granting step of granting a privilege to an owner of a puncture repair kit (1) in accordance with the rank.

8. A puncture repair kit management device (30) comprising:
a lot information acquisition unit (33, 34) configured to acquire information by which at least a manufacturing lot of a tire puncture repair kit (1) including a puncture repair liquid (10, 10A, 10B) can be specified; and
a classification unit (37) configured to classify a recycling method for the puncture repair liquid (10, 10A, 10B) on the basis of the information by which the manufacturing lot can be specified.

9. The puncture repair kit management device (30) according to claim 8, further comprising an elapsed period acquisition unit (35) configured to acquire an elapsed period from a time of manufacturing of the tire puncture repair kit (1) on the basis of the information by which the manufacturing lot can be specified, wherein
the classification unit (37) classifies the recycling method for the puncture repair liquid (10, 10A, 10B) on the basis of the elapsed period from the time of manufacturing.

10. The puncture repair kit management device (30) according to claim 9, further comprising an estimation unit (36) configured to estimate a state of natural rubber contained in the puncture repair liquid (10, 10A, 10B) on the basis of the information by which the manufacturing lot can be specified, wherein
the classification unit (37) classifies the recycling method for the puncture repair liquid (10, 10A, 10B) in accordance with the state of the natural rubber.

11. The puncture repair kit management device (30) according to claim 10, wherein
the estimation unit (36) estimates a weight-average molecular weight of the natural rubber contained in the puncture repair liquid (10, 10A, 10B) on the basis of the information by which the manufacturing lot can be specified, and
the classification unit (37) classifies the recycling method for the puncture repair liquid (10, 10A, 10B) in accordance with the weight-average molecular weight.

12. The puncture repair kit management device (30) according to claim 11, wherein the classification unit (37) classifies the recycling method for the puncture repair liquid (10, 10A, 10B) such that, as the weight-average molecular weight increases, the puncture repair liquid (10, 10A, 10B) is recycled into a material requiring greater strength.

13. The puncture repair kit management device (30) according to claim 11 or 12, wherein the classification unit (37) classifies the recycling method for the puncture repair liquid (10, 10A, 10B) such that, as the weight-average molecular weight decreases, the puncture repair liquid (10, 10A, 10B) is recycled into a material requiring greater viscosity.

14. The puncture repair kit management device (30) according to any one of claims 11 to 13, further comprising a privilege granting unit (39) configured to rank the puncture repair liquid (10, 10A, 10B) in accordance with the weight-average molecular weight and grant a privilege to an owner of the puncture repair kit (1) in accordance with the rank.

15. The puncture repair kit management device (30) according to any one of claims 11 to 14, further comprising a database (DB) in which a relationship between an elapsed period from a time of manufacturing of the puncture repair liquid (10, 10A, 10B) and an estimated value of the weight-average molecular weight of the natural rubber is recorded, wherein
the estimation unit (36) acquires the elapsed period on the basis of the information by which the manufacturing lot can be specified and estimates the weight-average molecular weight on the basis of the database (DB) and the elapsed period.
